# EUROPEAN PATENT SPECIFICATION

(11) **EP 2 084 004 B1**
(45) Date of publication and mention of the grant of the patent: **27.03.2013**
(21) Application number: 07824090.0
(22) Date of filing: 09.10.2007
(51) Int. Cl.: B32B 38/10, A41D 31/00

(54) **A METHOD OF MANUFACTURING A FLEXIBLE, IMPACT- RESISTANT LAMINATE**
VERFAHREN ZUR HERSTELLUNG EINES FLEXIBLEN, SCHLAGFESTEN LAMINATS
PROCÉDÉ DE FABRICATION D'UN STRATIFIÉ FLEXIBLE, RÉSISTANT AU CHOC

(30) Priority: 11.10.2006 GB 0620110; 27.10.2006 GB 0621460
(43) Date of publication of application: 05.08.2009
(73) Proprietor: Stirling Moulded Composites Limited, Accrington BB5 0RR (GB)
(72) Inventor: TAYLOR, David Stirling, Accrington BB5 0RR (GB)
(74) Representative: Bray, Lilian Janet
(86) International application number: PCT/GB2007/003836
(87) International publication number: WO 2008/044007

(56) References cited:
- WO-A-01/03530
- WO-A-02/081202
- WO-A-2006/036072
- DE-A1- 19 640 263
- GB-A- 2 304 539
- US-A1- 2005 153 107
- US-A1- 2005 287 346

## Description

The present invention relates to a method of manufacturing a flexible, impact-resistant laminate and to a laminate produced by such a method.

Such laminates are widely used as protective material which is incorporated into clothing and the like to fashion protective wear for human and animal bodies. Such protective wear is used during sport, rugby for example and equestrian sports and in other activities where a person runs a risk of injury, for example building and other trades.

Conventional protective wear may form an integral part of an item of clothing, for example a shoulder pad, or be provided separately, for example a shin pad.

In WO 01/03550 is described a method of manufacturing a flexible laminate comprising the following steps:-
1. providing a sheet of a resilient material, such as a closed cell foam;
2. cutting the sheet into a plurality of spaced, separate elements using a cutter which is pressed into the sheet to cut therethrough;
3 making one side of the spaced elements to stand proud of the surface of a jig provided to hold the elements in place;
4. removing excess resilient material from between the spaced, separate elements; and
5. bonding a flexible, resiliently stretchable substrate to one side of the separate elements by heating the substrate either to activate an adhesive applied between said one side of the separate elements and the substrate or to fuse the elements to the substrate.

In this method, the cutter acts as the jig after cutting through the resilient foam to hold the elements in place while the substrate layer is applied thereto. Prior to this, excess material from between the elements is removed before the bonding of the spaced elements to the substrate. Such excess material is then scrapped.

The object of the present invention is to provide an improved method of manufacturing the flexible material.

According to a first aspect of the present invention there is provided a method of manufacturing a flexible, impact-resistant material comprising the steps of
providing a sheet of a closed-cell foam material;
cutting the sheet into a pattern;
providing a first, flexible layer of material; and
bonding the pattern to one side of the first layer of material; characterised in that
the sheet is cut into at least two tessellating patterns, and in that prior to bonding the tessellating patterns are moved differentially relative to one another such that the surface of one of the tessellating patterns stands proud of the surface of the other tessellating patterns, a first of said tessellating patterns being that bonded to said one side of the first layer of material.

It will be appreciated that in this method excess material from between the elements is not removed before the spaced elements are bonded to the flexible layer of material that forms substrate. Bonding of the elements to the material takes place first and excess foam material can then be scrapped. However, by appropriate design of the tessellating patterns the foam material forming the second and any subsequent patterns need not be scrapped but used to form another sheet of flexible, impact-resistant material. This greatly increases the efficiency of the process and reduces waste because all of the closed-cell foam material can be used rather a proportion of it being scrapped. This saves cost in addition to preventing unnecessary waste. The manufacturing process is also speeded up.

Preferably, the sheet of closed-cell foam is cut into the tessellating patterns using a cutter which is pressed into the foam to cut therethrough.

Preferably also, the cutter is adapted so that after the sheet of closed-cell foam has been cut all of the tessellating patterns stand proud of the surface of the cutter grid.

Preferably also, a block arrangement is located within the cutter that causes the tessellating patterns to move relative to one another after the sheet of foam has been cut.

Preferably also, the cutter comprises a plurality of cutter blades each with a polygonal or closed curve profile that are mounted on a board, a block being located within each of the cutter blades that defines an exposed surface at a level higher, relative to the cutter blades, than the level of the board surrounding the cutter blades.

Preferably also, the cutter is adapted so that after the sheet of closed-cell foam has been cut all of the tessellating patterns stand proud of the cutter.

Preferably also, opposing faces of the sheet of closed-cell foam material are coated with a hot-melt adhesive prior to the sheet being cut into said tessellating patterns.

Preferably also, the method comprises the additional step of bonding the closed-cell foam comprising one of the tessellating patterns to one side of a second flexible layer of material on the other side of the laminate to the first layer of material after the foam material defining said one tessellating pattern has been removed from contact with the other tessellating patterns.

Preferably also, the method comprises the additional steps of providing a third flexible layer of material and bonding a second tessellating pattern to one side of the third layer of material after the foam material defining the first tessellating pattern has been removed therefrom to create a second flexible, impact-resistant laminate.

Preferably also, the flexible layers of material to which the closed-cell foam is bonded comprise at least one of the following, namely a resiliently stretchable fabric, a knitted fabric, a woven fabric, a plastics sheeting.

According to second aspect of the present invention there is provided a flexible, impact-resistant laminate manufactured in accordance with the first aspect of the invention.

The various aspects of the present invention will now be described by way of example with reference to the accompanying drawings, in which:
Fig. 1 is a perspective view of a flexible, impact-resistant laminate manufactured in accordance with the method of the present invention;
Fig. 2 is a plan view of a sheet of closed-cell foam cut into two tessellating patterns in accordance with the method of the present invention;
Fig. 3 is a plan view of a cutter for use in the method according to the present invention;
Fig. 4 is a vertical cross-section, to an enlarged scale, through part of the cutter as shown in Fig. 3; and
Figs. 5 to 8 are a series of diagrams showing various stages during the manufacture of a laminate as shown in Fig. 1.

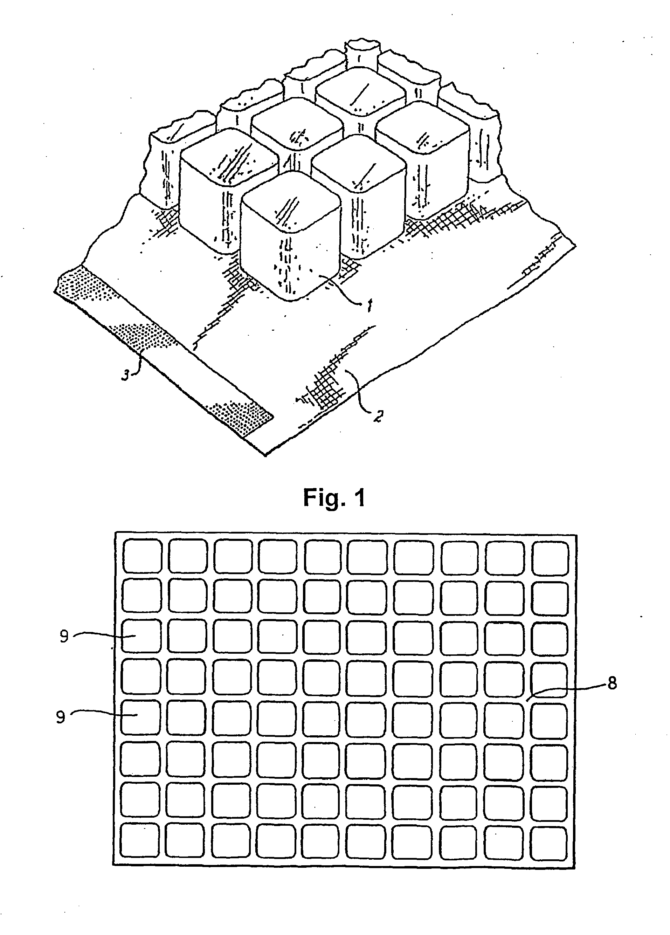

As shown in Fig. 1, a flexible, impact resistant laminate manufactured according to the present invention comprises a plurality of elements 1 of a resilient closed-cell foam fused to or joined by an adhesive to a flexible layer of material 2. The elements 1 are evenly arranged, each element 1 being spaced from adjacent elements 1 by between 1 mm and 4 mm.

In the embodiment illustrated, a margin of material 2 is provided around the periphery of the elements 1 and along the edges of the material at opposite ends respectively there are strips 3 of VELCRO (registered trade mark), only one of which is shown. These strips 3 can be used to join a piece of the laminate together, for example to for a wrist band or shin pad. Alternatively, the edges of the laminate can be sewn or otherwise secured to clothing parts or other material dependent on the use to which it is to be put.

Advantageously, the closed-cell foam is a polyethylene foam and the elements 1 comprise cubes which are evenly distributed with a density of between 100 and 8000 cells or elements/m². For some applications, the density can be lower than for protective wear as the greater the density, the greater the flexibility of the laminate. For protective wear a density between 2000 and 6000 elements/m² is preferable as it allows the laminate to flex easily in all directions without "locking up" or preventing movement in a particular direction. Also, it enables the laminate to be cut into small pieces, for example to form protective wear of different sizes, without significantly affecting its ability to flex.

Although the elements 1 are shown as cubes in Fig. 1, the foam can be cut into other shapes, an hexagonal shape being preferable for some applications.

If the laminate is to be used in the production of protective wear or upholstery, the material 2 is preferably made of a resiliently stretchable knitted fabric, advantageously one comprising polyester or elastane fibres. However, in other applications, the material 2 can be made of a hard-wearing knitted or woven fabric or film, that does not need to be stretchable. Suitable films include plastics films such as sheets of polyethylene or polyurethane.

In some applications, a second layer of flexible material is bonded over the elements 1 so that they are sandwiched between two layers. In this case, if the first layer of material is resiliently stretchable or elastic, this helps to prevent puckering of one side of the laminate when it is flexed. Advantageously, however, both the outer layers of material are resiliently stretchable. In cases where only a single stretchable layer of material 2 is provided and the laminate is to be used in a curved configuration, for example in protective clothing, the laminate is preferably arranged so that the stretchable material layer lies on the outside surface of the curve.

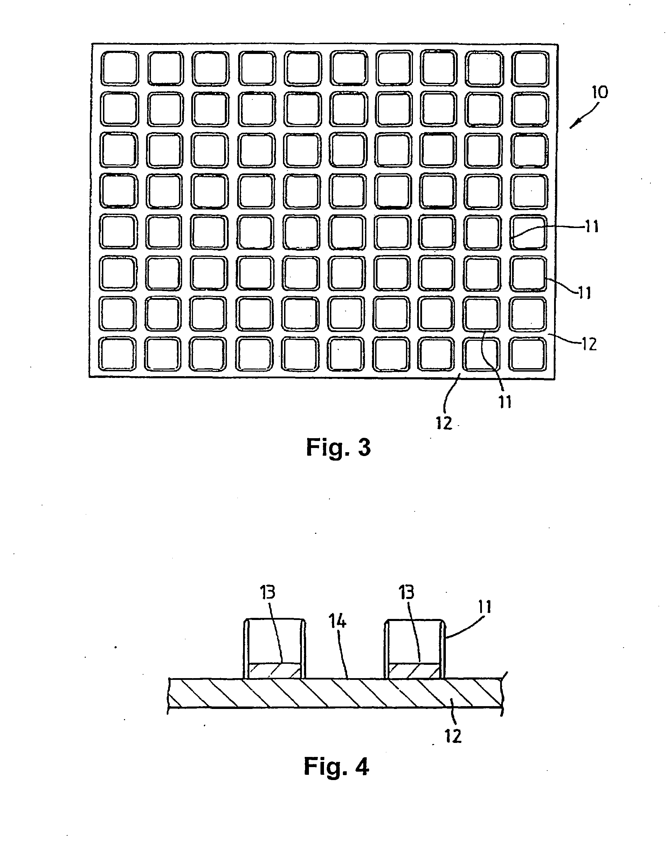

Fig. 3 shows a plan view of a first embodiment of cutter 10 used in the manufacture of the material shown in Fig. 1. The cutter 10 comprises a plurality of blades 11 with a polygonal or closed curve profile that are mounted on a board 12. In the present embodiment the blades 11 each define a rectangular profile which determines the size of the elements 1. If the laminate material is for use in protective wear, for example, the blades 11 may have sides that are 12 mm long with corners of radius 2.5 mm. However, it will be appreciated that any appropriate blade profile 11 could be used. Also, the height of the blades 11 of the cutter 10 are arranged to be slightly smaller than the thickness of foam sheet with which the cutter 10 is to be used. This means that when the cutter 10 is used to cut a sheet of foam as shown in Fig. 2, the foam is cut into two tessellating patterns comprising a cellular matrix 8 and a regular series of elements 9 comprising blocks or cubes 18.

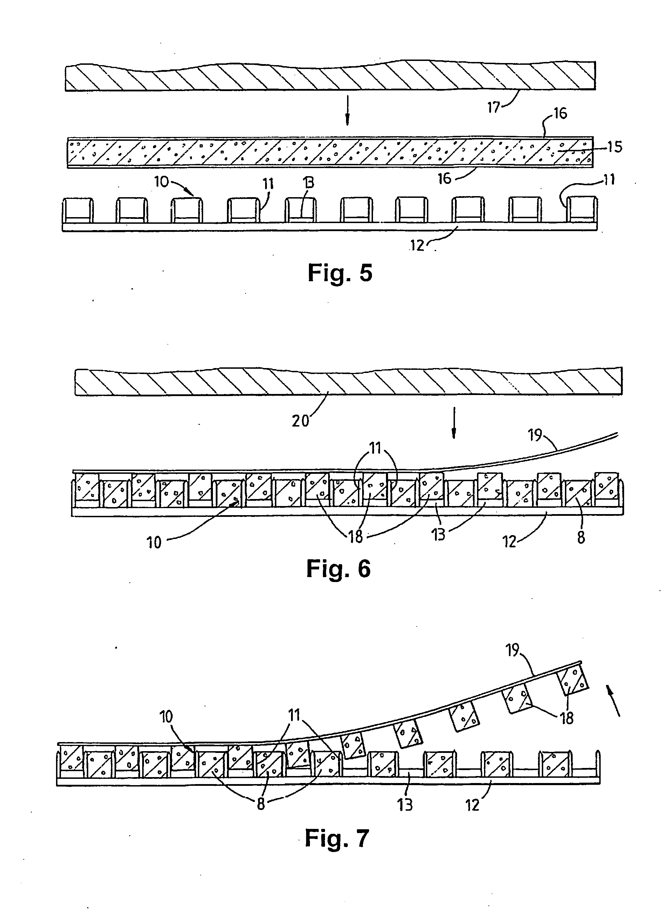

Fig. 4 is a diagram showing a vertical section through one of the blades 11 and the surrounding board 12. It can be seen that within each of the cutter blades 11 is a block 13 which has an exposed surface at a level higher relative to the blades 11 than the level of the board 12 surrounding the blades 11. This means that after cutting of the sheet of foam, the foam cubes 18 within the blades 11 are raised above the level of the matrix 8 after cutting. The reason for this will now be explained and the steps involved in manufacturing a laminate using the cutter shown in Figs. 3 and 4 will now be described with reference to the sequence of drawings as shown in Figs. 5 to 8.

First, both sides of a sheet 15 of closed cell foam are coated on both sides with a hot melt adhesive 16. The foam 15 is then placed over a cutter 10, of the type shown in Figs. 3 and 4, and either pressed down with a press 17, as shown in Fig. 5, or passed through nip rollers (not shown) so that the cutter 10 cuts through the foam 15 to form a cellular matrix 8, as shown in Fig. 2, and a plurality of separate cubes 18. Once the press 17 is removed, owing to its springy nature the foam 15 will tend to spring back slightly so that its upper surface stands proud above the upper surface of the cutter 10 as defined by the edges of the blades 11. However, as the foam cubes 18 within the blades are supported by the blocks 13 at a higher level than the cellular matrix 8, the cubes 18 stands proud of the surface of the matrix 8 as shown in Fig, 7. The cutter 10 therefore acts as a jig, holding the cut foam in position during the next stage of the manufacturing process.

Next, as shown in Fig. 6, a first layer of material 19 is placed over the foam 15 and the cutter 10. In view of the difference in height between the cellular matrix 8 and the cubes 18, the inner surface of the material 19 only contacts the upper surface of the cubes 18. A heated platen 20 is now brought into contact with outer surface of the material 19 and heat is conducted through the material 19 to the foam of the cubes 18 which activates the adhesive coating 16. This bonds the material 19 to the cubes 18 but not to the cellular matrix 8. Heated nip rollers (not shown) could be used in place of the platen 20. Once the adhesive has been activated, the material 19 can be lifted away from the cutter 10 taking the cubes 18 with it and leaving the cellular matrix 8 behind, as shown in Fig. 7. The cellular matrix 8 could now be scrapped. Preferably, however, the cellular matrix 8 is then also bonded to another layer of flexible material 19 in exactly the same way as the cubes 8. Hence, none of the foam sheet 15 is wasted, which is advantageous because it is both expensive to produce and to dispose of as a waste product. It will be appreciated, therefore, that preferably the cutter 10 is adapted to cut the foam sheet 15 into two tessellating patterns which are both suitable for use in the production of a useable laminate, each pattern having foam regions that are neither too small nor too narrow to be practical. For, example, the patterns may comprise one which forms a cellular matrix and the other foam elements, as in the illustrated embodiment, or both could form elements in a chequerboard pattern or similar with square or other polygonal shapes. The patterns may also define stripes or swirling patterns. The patterns could also be specially adapted and bespoke for particular applications of the laminate as such a laminate will have different properties in different areas and when flexed in different directions.

It is also conceivable for more than two tessellating patterns to be cut and two series of blocks 13 of different heights arranged in the cutter 10 so that each pattern is raised by a different amount to enable each foam pattern to be individually bonded to a separate layer of material 19.

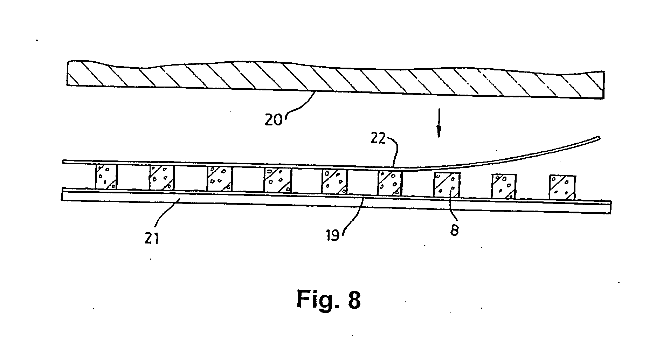

As shown in Fig. 8, once the foam cubes 18 or cellular matrix 8 have been bonded to a first layer of material 19, a second layer of a flexible material 22 can be then bonded to the other side of the foam by supporting the laminate on a board 21 and using a heated platen 20 or heated nip rollers (not shown) in the same way as for the first layer of material 19.

Variations to the above method are possible, for example the closed-cell foam may be fused to the layers 19 and 22 by the application of heat so that it partially melts on the surface rather than being adhered thereto. In addition, other impact resistance materials, such as an elastomeric material, could be used to fill the spaces between the regions of closed-cell foam.

## Claims

1. A method of manufacturing a flexible, impact-resistant material comprising the steps of
providing a sheet (15) of a closed-cell foam material;
cutting the sheet (15) into a pattern (9);
providing a first, flexible layer of material (19); and
bonding the pattern (9) to one side of the first layer of material (19);
**characterised in that**
the sheet (15) is cut into at least two tessellating patterns (8, 9), and **in that** prior to bonding the tessellating patterns (8, 9) are moved differentially relative to one another such that the surface of one (9) of the tessellating patterns stands proud of the surface of the other tessellating patterns (8), a first of said tessellating patterns (8, 9) being that bonded to said one side of the first layer of material (19).

2. A method as claimed in Claim 1, wherein the sheet (15) of closed-cell foam is cut into the tessellating patterns (8, 9) using a cutter (10) which is pressed into the foam to cut therethrough.

3. A method as claimed in Claim 2, wherein a block arrangement (13) is located within the cutter (10) that causes the tessellating patterns (8, 9) to move relative to one another after the sheet (15) of foam has been cut.

4. A method as claimed in Claim 3, wherein the cutter (10) comprises a plurality of cutter blades (11) each with a polygonal or closed curve profile that are mounted on a board (12), a block (13) being located within each of the cutter blades (11) that defines an exposed surface at a level higher, relative to the cutter blades (11), than the level of the board (12) surrounding the cutter blades (11).

5. A method as claimed in any of Claims 1 to 4, wherein the cutter (10) is adapted so that after the sheet (15) of closed-cell foam has been cut all of the tessellating patterns (8, 9) stand proud of the cutter (10).

6. A method as claimed in any of Claims 1 to 5, wherein opposing faces of the sheet (15) of closed-cell foam material are coated with a hot-melt adhesive (16) prior to the sheet (15) being cut into said tessellating patterns (8, 9).

7. A method as claimed in any of Claims 1 to 6, comprising the additional step of bonding the closed-cell foam comprising one of the tessellating patterns (8, 9) to one side of a second flexible layer of material (22) on the other side of the laminate to the first layer of material (19) after the foam material defining said one tessellating pattern has been removed from contact with the other tessellating patterns.

8. A method as claimed in any of Claims 1 to 7, comprising the additional steps of providing a third flexible layer of material (19) and bonding a second tessellating pattern to one side of the third layer of material after the foam material defining the first tessellating pattern has been removed therefrom to create a second flexible, impact-resistant laminate.

9. A method as claimed in any of Claims 1 to 8, wherein the flexible layers of material (19, 22) to which the closed-cell foam (15) is bonded comprise at least one of the following, namely a resiliently stretchable fabric, a knitted fabric, a woven fabric, a plastics sheeting.

## Patentansprüche

1. Verfahren zum Herstellen eines flexiblen, schlagfesten Materials,
das folgende Schritte aufweist:
- Vorsehen eines Flächenkörpers (15) aus einem geschlossenzelligen Schaummaterial;
- Schneiden des Flächenkörpers (15) in ein Muster (9);
- Vorsehen einer ersten, flexiblen Materialschicht (19); und
- Verbinden des Musters (9) mit der einen Seite der ersten Materialschicht (19);
**dadurch gekennzeichnet,**
**dass** der Flächenkörper (15) in mindestens zwei schachbrettartige Muster (8, 9) geschnitten wird
und **dass** vor dem Verbinden die schachbrettartigen Muster (8, 9) differenziert relativ zueinander bewegt werden, so dass die Oberfläche des einen schachbrettartigen Musters (9) von den schachbrettartigen Mustern von der Oberfläche des anderen schachbrettartigen Musters (8) vorsteht, wobei ein erstes der schachbrettartigen Muster (8, 9) mit der einen Seite der ersten Materialschicht (19) verbunden wird.

2. Verfahren nach Anspruch 1,
wobei der Flächenkörper (15) aus geschlossenzelligem Schaum in die schachbrettartigen Muster (8, 9) geschnitten wird unter Verwendung einer Schneideinrichtung, welche in den Schaum hineingepresst wird, um diesen zu durchschneiden.

3. Verfahren nach Anspruch 2,
wobei eine Blockanordnung (13) innerhalb der Schneideinrichtung (10) angeordnet wird, welche bewirkt, dass die schachbrettartigen Muster (8, 9) sich relativ zueinander bewegen, nachdem der Flächenkörper (15) aus Schaum geschnitten worden ist.

4. Verfahren nach Anspruch 3,
wobei die Schneideinrichtung (10) eine Vielzahl von Schneidklingen (11) aufweist, die jeweils mit einem polygonalen Profil oder einem Profil einer geschlossenen Kurve versehen sind, welche auf einer Platte (12) angebracht sind, wobei sich ein Block (13) innerhalb von jeder der Schneidklingen (11) befindet, der eine freiliegende Oberfläche auf einem höheren Niveau, relativ zu den Schneidklingen (11), als dem Niveau der Platte (12) bildet, welche die Schneidklingen (11) umgibt.

5. Verfahren nach einem der Ansprüche 1 bis 4,
wobei die Schneideinrichtung (10) derart ausgebildet ist, dass, nachdem der Flächenkörper (15) aus geschlossenzelligem Schaum geschnitten worden ist, sämtliche schachbrettartigen Muster (8, 9) von der Schneideinrichtung (10) vorstehen.

6. Verfahren nach einem der Ansprüche 1 bis 5,
wobei gegenüberliegende Seiten des Flächenkörpers (15) aus geschlossenzelligem Schaummaterial mit einem Hotmelt-Klebstoff (16) überzogen werden, bevor der Flächenkörper (15) in die schachbrettartigen Muster (8, 9) geschnitten wird.

7. Verfahren nach einem der Ansprüche 1 bis 6,
das den zusätzlichen Schritt umfasst, bei dem der geschlossenzellige Schaum, der eines der schachbrettartigen Muster (8, 9) besitzt, mit der einen Seite einer zweiten, flexiblen Materialschicht (22) auf der anderen Seite des Laminats zu der ersten Materialschicht (19) verbunden wird, nachdem das Schaummaterial, welches das eine schachbrettartige Muster bildet, aus dem Kontakt mit dem anderen schachbrettartigen Muster entfernt worden ist.

8. Verfahren nach einem der Ansprüche 1 bis 7,
das den zusätzlichen Schritt aufweist, bei dem eine dritte, flexible Materialschicht (19) vorgesehen wird und ein zweites schachbrettartiges Muster mit der einen Seite der dritten Materialschicht verbunden wird, nachdem das Schaummaterial, welches das erste schachbrettartige Muster bildet, davon entfernt worden ist, um ein zweites, flexibles schlagfestes Laminat zu erzeugen.

9. Verfahren nach einem der Ansprüche 1 bis 8,
wobei die flexiblen Materialschichten (19, 22), mit denen der geschlossenzellige Schaum (15) verbunden wird, mindestens eines aus den folgenden Materialien aufweist, nämlich ein elastisch dehnbares textiles Flächengebilde, ein Gestrick oder Gewirk, ein Gewebe und eine Kunststofffolie.

## Revendications

1. Procédé pour fabriquer un matériau flexible résistant au choc, comprenant les étapes consistant à
prévoir une feuille (15) d'un matériau en mousse à alvéoles fermées ;
couper la feuille (15) selon un modèle (9) ;
prévoir une première couche flexible de matériau (19) ; et
relier le modèle (9) à un côté de la première couche de matériau (19) ;
**caractérisé en ce que**
la feuille (15) est coupée en au moins deux modèles en mosaïque (8, 9), et **en ce que**, avant la liaison, les modèles en mosaïque (8, 9) sont déplacés de manière différentielle l'un par rapport à l'autre de sorte que la surface de l'un (9) des modèles en mosaïque dépasse la surface de l'autre modèle en mosaïque (8), un premier desdits modèles en mosaïque (8, 9) étant celui qui est relié audit un côté de la première couche de matériau (19).

2. Procédé selon la revendication 1, dans lequel la feuille (15) de mousse à alvéoles fermées est coupée en modèles en mosaïque (8, 9) à l'aide d'un dispositif de coupe (10) qui est enfoncé dans la mousse pour la couper.

3. Procédé selon la revendication 2, dans lequel un agencement de bloc (13) est positionné à l'intérieur du dispositif de coupe (10) qui amène les modèles en mosaïque (8, 9) à se déplacer les uns par rapport aux autres après que la feuille (15) de mousse a été coupée.

4. Procédé selon la revendication 3, dans lequel le dispositif de coupe (10) comprend une pluralité de lames (11) de dispositif de coupe, chacune avec un profil de courbe polygonale ou fermée, qui sont montées sur une planche (12), un bloc (13) étant positionné à l'intérieur de chacune des lames de dispositif de coupe (11) qui définit une surface exposée à un niveau plus haut, par rapport aux lames de dispositif de coupe (11), que le niveau de la planche (12) entourant les lames de dispositif de coupe (11).

5. Procédé selon l'une quelconque des revendications 1 à 4, dans lequel le dispositif de coupe (10) est adapté de sorte que, après que la feuille (15) de mousse à alvéoles fermées a été coupée, la totalité des modèles en mosaïque (8, 9) dépassent du dispositif de coupe (10).

6. Procédé selon l'une quelconque des revendications 1 à 5, dans lequel les faces opposées de la feuille (15) de matériau en mousse à alvéoles fermées sont recouvertes avec un adhésif à chaud (16) avant que la feuille (15) ne soit coupée dans ledit modèle en mosaïque (8, 9).

7. Procédé selon l'une quelconque des revendications 1 à 6, comprenant l'étape supplémentaire consistant à relier la mousse à alvéoles fermées comprenant l'un des modèles en mosaïque (8, 9) à un côté d'une deuxième couche flexible de matériau (22) de l'autre côté du stratifié à la première couche de matériau (19) après que le matériau en mousse définissant ledit modèle en mosaïque n'est plus en contact avec les autres modèles en mosaïque.

8. Procédé selon l'une quelconque des revendications 1 à 7, comprenant les étapes supplémentaires consistant à prévoir une troisième couche flexible de matériau (19) et à relier un second modèle en mosaïque à un côté de la troisième couche de matériau après que le matériau en mousse définissant le premier modèle en mosaïque a été retiré de cette dernière afin de créer un second stratifié flexible résistant au choc.

9. Procédé selon l'une quelconque des revendications 1 à 8, dans lequel les couches flexibles de matériau (19, 22) auxquelles la mousse à alvéoles fermées (15) est reliée, comprennent au moins l'une des feuilles suivantes, à savoir une feuille de tissu élastiquement extensible, une feuille de tissu tricoté, une feuille de tissu tissé ou une feuille de matière plastique.
